(19) Europäisches Patentamt
European Patent Office
Office européen des brevets

(11) **EP 4 178 103 A1**

(12) **EUROPÄISCHE PATENTANMELDUNG**

(43) Veröffentlichungstag:
**10.05.2023 Patentblatt 2023/19**

(21) Anmeldenummer: **21207172.4**

(22) Anmeldetag: **09.11.2021**

(51) Internationale Patentklassifikation (IPC):
*H02P 27/06* (2006.01)   *B25F 5/00* (2006.01)
*H02M 1/36* (2007.01)   *H02M 7/12* (2006.01)

(52) Gemeinsame Patentklassifikation (CPC):
**H02P 27/06; B25F 5/00; H02J 7/345; H02M 1/36**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
• **Wißmach, Walter**
**80637 München (DE)**

• **Augustin, Christian**
**86554 Pöttmes (DE)**
• **Kidess, Anton**
**86899 Landsberg am Lech (DE)**
• **Scherbaum, Markus**
**86853 Gennach (DE)**
• **Freischle, Justus**
**86899 Landsberg am Lech (DE)**

(74) Vertreter: **Hilti Aktiengesellschaft**
**Corporate Intellectual Property**
**Feldkircherstrasse 100**
**Postfach 333**
**9494 Schaan (LI)**

(54) **NETZBETREIBBARES ELEKTROWERKZEUG**

(57) Netzbetreibbares Elektrowerkzeug mit einem Netzanschluss, einem dem Netzanschluss nachgeschalteten Gleichrichter und einem Elektromotor mit vorgeschalteter Motorstufe, wobei der Gleichrichter und die Motorstufe über einen Zwischenkreis verbunden sind, der einen parallel zum Gleichrichter geschalteten Glättungskondensator und einen parallel zum Gleichrichter geschalteten Schaltzweig aufweist, wobei der Schaltzweig einen Zusatzkondensator aufweist, der mittels eines vom Schaltzweig umfassten Schaltelements bedarfsweise über einen vom Zwischenkreis umfassten Entladekreis entladen werden kann, wobei der Zwischenkreis eine Vorladeschaltung aufweist, mittels welcher eine Offset-Spannung des Zusatzkondensators eingestellt oder einstellbar ist.

Fig. 2d

EP 4 178 103 A1

**Beschreibung**

Die vorliegende Erfindung betrifft ein netzbetreibbares Elektrowerkzeug mit einem Netzanschluss, einem dem Netzanschluss nachgeschalteten Gleichrichter und einem Elektromotor mit vorgeschalteter Motorstufe. Der Gleichrichter und die Motorstufe sind über einen Zwischenkreis verbunden, der einen parallel zum Gleichrichter geschalteten Glättungskondensator und einen parallel zum Gleichrichter geschalteten Schaltzweig aufweist. Der Schaltzweig weist einen Zusatzkondensator auf, der mittels eines vom Schaltzweig umfassten Schaltelements bedarfsweise über einen vom Zwischenkreis umfassten Entladekreis entladen werden kann.

Elektrowerkzeug der eingangs genannten Art sind grundsätzlich aus dem Stand der Technik bekannt. EP 3 235 118 B1 offenbart ein Elektrowerkzeug mit einem Schaltpfad, der einen Hilfskondensator einschließt, welcher mit einem Schalter in Reihe geschaltet ist.

Es ist Aufgabe der vorliegenden Erfindung ein Elektrowerkzeug bereitzustellen, dessen Zwischenkreis die Grundlage für ein optimales Ladeverhalten des Zusatzkondensator schafft. Die Aufgabe wird dadurch gelöst, dass der Zwischenkreis eine Vorladeschaltung aufweist, mittels welcher eine Offset-Spannung des Zusatzkondensators eingestellt oder einstellbar ist.

Die Erfindung schließt die Erkenntnis ein, dass die Fähigkeit des Zusatzkondensators Energie zu speichern neben der Kapazität von seinem anfänglichen Ladezustand abhängt. Soll eine bestimmte Kondensatorspannung $U_{max}$ nicht überschritten werden, darf die zu speichernde Energie nicht größer sein als:

$$\Delta W_{max} = \frac{1}{2} C (U_0^2 - U_{max}^2)$$

wobei C die Kapazität und $U_0$ die Kondensatorspannung vor dem Speichervorgang (Offset-Spannung) ist. Je größer die Offset-Spannung, desto kleiner ist die aufnehmbare Energie des Zusatzkondensators. Ist die Offset-Spannung gleich der Maximalspannung, kann keine Energie durch den Zusatzkondensator mehr aufgenommen werden.

Dadurch, dass der Zwischenkreis erfindungsgemäß eine Vorladeschaltung aufweist, mittels welcher eine Offset-Spannung des Zusatzkondensators eingestellt oder einstellbar ist, wird die Grundlage für ein optimales Ladeverhalten des Zusatzkondensators geschaffen. Dabei ist ein optimales Ladeverhalten - insbesondere in Hinblick auf das Elektrowerkzeug als Gesamtsystem - nicht notwendigerweise dann gegeben, wenn die Offset-Spannung minimal, beispielsweise gleich einer Zwischenkreisspannung oder geringer ist. Vielmehr kann durch die erfindungsgemäß bereitgestellte Vorladeschaltung sichergestellt (oder zumindest begünstigt) werden, dass im Sinne der o.g. Gleichung die Offset-Spannung niedrig genug ist, um genug Energie aufnehmen zu können und hoch genug ist, um eine Hilfsspannungsversorgung des Elektrowerkzeugs versorgen, insbesondere dauerhaft versorgen zu können. Es hat sich als vorteilhaft herausgestellt, wenn die Vorladeschaltung als Vorladekreis ausgebildet ist.

In einer besonders bevorzugten Ausgestaltung ist der Entladekreis Teil einer Hilfsspannungsversorgung des Elektrowerkzeugs. Es hat sich als vorteilhaft herausgestellt, wenn die Hilfsspannungsversorgung parallel zum Zusatzkondensator geschaltet ist.

In einer weiteren besonders bevorzugten Ausgestaltung ist der Zwischenkreis derart eingerichtet, dass die Offset-Spannung mittels der Vorladeschaltung auf einen Energiebedarf der Hilfsspannungsversorgung abgestimmt ist. Es hat sich als vorteilhaft herausgestellt, wenn die Offset-Spannung mittels der Vorladeschaltung in Abhängigkeit von einer Kenngröße, die eine am Netzanschluss anliegende Netzspannung charakterisiert, geregelt oder gesteuert wird. Die Kenngröße kann ein Spannungspotenzial, eine Frequenz und/oder eine Phasenlage der Netzspannung sein. Die Vorladeschaltung kann einen Steuereingang und/oder einen Regeleingang aufweisen. Es hat sich als vorteilhaft herausgestellt, wenn der Steuereingang und/oder der Regeleingang mit einem von dem Elektrowerkzeug umfassten Mikrocontroller signalverbunden ist.

Es hat sich als vorteilhaft herausgestellt, wenn die Vorladeschaltung ein Widerstandsnetzwerk aufweist oder durch ein Widerstandsnetzwerk gebildet ist. Die Vorladeschaltung kann ein Widerstandsnetzwerk und/oder eine Zener-Diode aufweisen. Es hat sich als vorteilhaft herausgestellt, wenn die Vorladeschaltung eine Regelung aufweist, insbesondere in Form eines Längsreglers. In einer weiteren besonders bevorzugten Ausgestaltung ist die Vorladeschaltung einerseits parallel zum Zusatzkondensator geschaltet. Andererseits kann sich die Vorladeschaltung über einen Vorladeanschlusspunkt speisen, der vorzugsweise in Reihe zwischen dem Glättungskondensator und dem Schaltelement liegt.

In einer besonders bevorzugten Ausgestaltung ist das Schaltelement selbsttätig-schaltend ausgebildet und insbesondere als Diac, Sidactor, TVS-Thyristor, Diac-Triac-Kombination oder Funkenstrecke ausgebildet. Das Schaltelement kann ein oder mehrere solcher Elemente aufweisen oder aus diesen bestehen. In einer weiteren besonders bevorzugten Ausgestaltung ist das Schaltelement aktiv-schaltend ausgebildet und insbesondere als MOSFET, IGBT, Thyristor, Triac ausgebildet. Das Schaltelement kann ein oder mehrere solcher Elemente aufweisen oder aus diesen bestehen. Es hat sich als vorteilhaft herausgestellt, wenn das Schaltelement einen Schalteingang aufweist.

In einer weiteren besonders bevorzugten Ausgestaltung weisen der Glättungskondensator und/oder der Zusatzkondensator eine Sperrspannung von wenigstens 600 Volt auf. Es hat sich als vorteilhaft herausgestellt, wenn der Glättungskondensator und/oder der Zusatzkondensator als Folienkondensator ausgebildet sind. Es hat sich als vorteilhaft herausgestellt, wenn die Kapazität des Glättungskondensators kleiner ist als die Kapazität des Zusatzkondensators.

Der Zusatzkondensator kann in Form eines Elektrolytkondensators ausgestaltet sein, welcher weniger als 600V und insbesondere zwischen 400 bis 450 V Spannungsfestigkeit aufweist.

Bei dem Glättungskondensator kann es sich um einen Folienkondensator mit mindestens 600V handeln. Bei dem Zusatzkondensator kann es sich um einen Elektrolytkondensator (auch Elko genannt) handeln.

In einer besonders bevorzugten Ausgestaltung weist die Motorstufe einen Wechselrichter aufweist. Es hat sich als vorteilhaft herausgestellt, wenn der Elektromotor als Drehstrommotor ausgebildet ist. Es hat sich als vorteilhaft herausgestellt, wenn das Elektrowerkzeug als elektrische Handwerkzeugmaschine ausgebildet ist.

Gemäß eines weiteren eigenständig schutzfähigen Gegenstands wird ein netzbetreibbares Elektrowerkzeug mit einem Netzanschluss, einem dem Netzanschluss nachgeschalteten Gleichrichter und einem Elektromotor mit vorgeschalteter Motorstufe angegeben, wobei der Gleichrichter und die Motorstufe über einen Zwischenkreis verbunden sind, der einen parallel zum Gleichrichter geschalteten Glättungskondensator und einen parallel zum Gleichrichter geschalteten Schaltzweig aufweist, wobei der Schaltzweig einen Zusatzkondensator aufweist, der mittels eines vom Schaltzweig umfassten Schaltelements bedarfsweise über einen vom Zwischenkreis umfassten Entladekreis entladen werden kann. Der Glättungskondensator und/oder der Zusatzkondensator weisen eine Sperrspannung von wenigstens 600 Volt auf.

Es hat sich als vorteilhaft herausgestellt, wenn der Glättungskondensator und/oder der Zusatzkondensator als Folienkondensator ausgebildet sind. Es hat sich als vorteilhaft herausgestellt, wenn die Kapazität des Glättungskondensators kleiner ist als die Kapazität des Zusatzkondensators.

Gemäß eines weiteren eigenständig schutzfähigen Gegenstands wird ein netzbetreibbares Elektrowerkzeug mit einem Netzanschluss, einem dem Netzanschluss nachgeschalteten Gleichrichter und einem Elektromotor mit vorgeschalteter Motorstufe angegeben, wobei der Gleichrichter und die Motorstufe über einen Zwischenkreis verbunden sind, der einen parallel zum Gleichrichter geschalteten Glättungskondensator und einen parallel zum Gleichrichter geschalteten Schaltzweig aufweist, wobei der Schaltzweig einen Zusatzkondensator aufweist, der mittels eines vom Schaltzweig umfassten Schaltelements bedarfsweise über einen vom Zwischenkreis umfassten Entladekreis entladen werden kann. Das Schaltelement ist selbsttätig-schaltend ausgebildet ist und insbesondere als Diac, Sidactor, TVS-Thyristor, Diac-Triac-Kombination oder Funkenstrecke ausgebildet ist, oder das Schaltelement ist aktiv-schaltend ausgebildet ist und insbesondere als MOSFET, IGBT, Thyristor, Triac ausgebildet.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigt:

Fig. 1            ein netzbetreibbares Elektrowerkzeug;

Fig. 2a - d       ein Zwischenkreis mit Varianten der Vorladeschaltung;

Fig. 3            ein Zwischenkreis mit Vorladeschaltung und Hilfsspannungsversorgung; und

Fig. 4a - d       ein Zwischenkreis mit Varianten des Schaltelements.

## Ausführunasbeispiel:

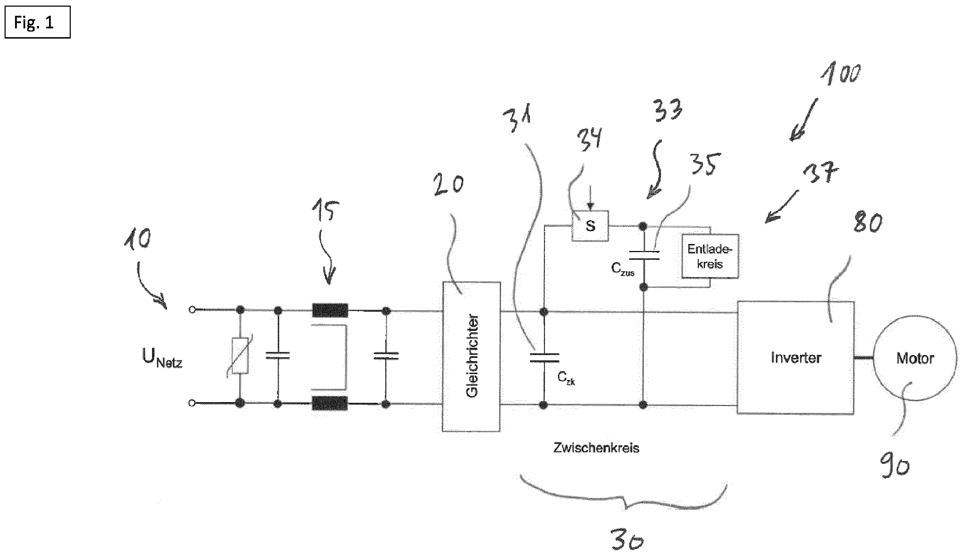

Fig. 1 zeigt - in stark schematisierter Darstellung - ein netzbetreibbares Elektrowerkzeug 100. Das Elektrowerkzeug 100 ist ausgestattet mit einem Netzanschluss 10, einem dem Netzanschluss 10 nachgeschalteten Gleichrichter 20 und einem Elektromotor 90 mit vorgeschalteter Motorstufe 80. Die Motorstufe 80 ist beispielhaft als Wechselrichter ausgebildet. Der Elektromotor 90 ist beispielhaft als Drehstrommotor ausgebildet.

Der Gleichrichter 20 und die Motorstufe 80 sind über einen Zwischenkreis 30 verbunden, der einen parallel zum Gleichrichter 20 geschalteten Glättungskondensator 31 und einen parallel zum Gleichrichter 20 geschalteten Schaltzweig 33 aufweist. Der Schaltzweig 33 weist einen Zusatzkondensator 35 auf, der mittels eines vom Schaltzweig 33 umfassten Schaltelements 34 bedarfsweise über einen vom Zwischenkreis 30 umfassten Entladekreis 37 entladen werden kann.

Der Zusatzkondensator 35 kann bedarfsweise über das Schaltelement 34 aufgeladen werden. Der Entladekreis 37 sorgt dafür, dass der aufgeladene Zusatzkondensator 35 wieder entladen wird und der Ausgangszustand mit der eingestellten Offset-Spannung am Zusatzkondensator 35 erreicht wird.

Das Elektrowerkzeug 100 ist über einen Netzfilter 15 an das Wechselstromnetz angeschlossen und die Wechselspannung $U_{Netz}$ wird von dem Gleichrichter 20 gleichgerichtet und vom Glättungskondensator 31 geglättet. Im Standby-Fall ist die Zwischenkreisspannung dauerhaft gleich einer Scheitelspannung der Netzspannung. Im belasteten Fall folgt die Zwischenkreisspannung im Wesentlichen der gleichgerichteten Netzspannung. Über das Schaltelement 34 (hier als aktives Element mit Schalteingang ausgebildet) ist am Zwischenkreis 30 der Zusatzkondensator 35 angeschlossen, der über den Entladekreis 37 entladen werden kann. Der Glättungskondensator 31 und der Zusatzkondensator 35 weisen vorliegend eine Sperrspannung von wenigstens 600 Volt auf und sind als Folienkondensatoren ausgebildet. Des Weiteren ist die Kapazität des Glättungskondensators 31 kleiner als die Kapazität des Zusatzkondensators 35.

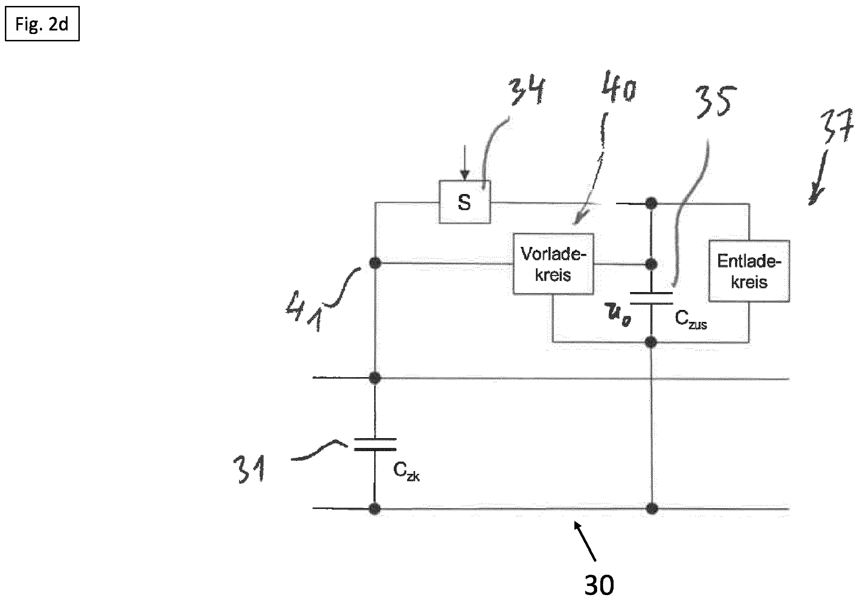

Erfindungsgemäß - siehe Fig. 2d) - ist der Zwischenkreis mit einer Vorladeschaltung 40 ausgestattet, mittels welcher eine Offset-Spannung $U_0$ des Zusatzkondensators 35 eingestellt oder einstellbar ist. Die Vorladeschaltung 40 ist einerseits parallel zum Zusatzkondensator 35 geschaltet. Andererseits speist sich die Vorladeschaltung 40 über einen Vorladeanschlusspunkt 41, der in Reihe zwischen dem Glättungskondensator 31 und dem Schaltelement 34 liegt. Der Vorladeanschlusspunkt 41 kann auch anderweitig angeschlossen werden, z.B. über einen zusätzlichen Hilfsgleichrichter, d.h. der Vorladekreis wird über eine gleichgerichtete Netzspannung versorgt.

Der wesentliche Vorteil ist, dass die dauernd anliegenden Spannungen am Glättungskondensator 31 und am Zusatzkondensator 35 unterschiedlich hoch sein können. Hierdurch wird es zum einen möglich, Kondensatortypen mit unterschiedlichen Maximalspannungen zu verwenden (z. B. Folienkondensatoren mit geringer Kapazität aber hoher Maximalspannung und Elektrolytkondensatoren hoher Kapazität und geringerer Maximalspannung).

Zum anderen wird die Fähigkeit des Zusatzkondensators 35, Energie zu speichern wesentlich erhöht, wenn er insbesondere stets mit geringer Vorladespannung betrieben werden kann, wodurch er kapazitätsmäßig deutlich kleiner dimensioniert werden kann.

Geeignet gewählte Aktivierungs- und Deaktivierungsstrategien des Schaltelements 34 zusammen mit einer variablen Vorladespannung, die durch die Vorladeschaltung 40 bedingt werden können, erlauben es weiterhin, zwischen kurzzeitig auftretenden und dauerhaft anliegenden Netzüberspannungen zu unterscheiden und den Zusatzkondensator 35 immer als Speicher für kurzzeitig auftretende Spannungsimpulse zu nutzen.

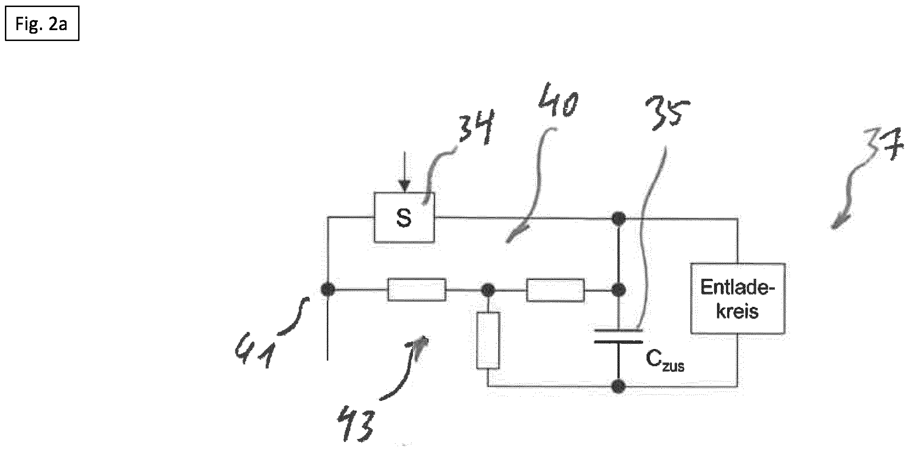

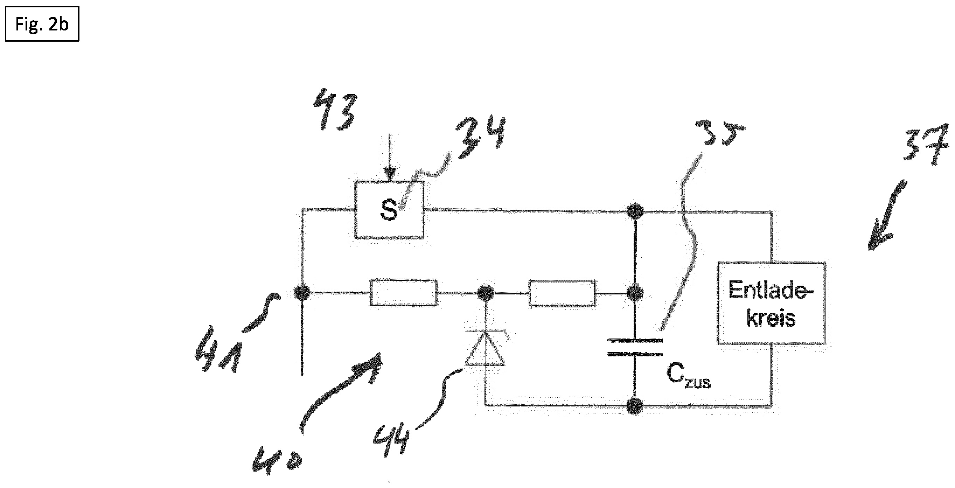

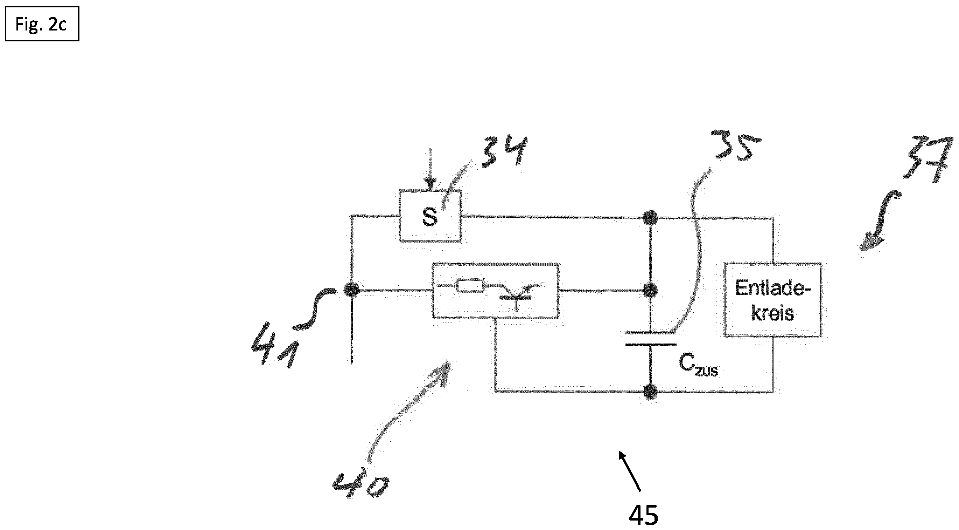

Ein Zwischenkreis 30 mit Varianten der Vorladeschaltung 40 ist in Fig. 2 dargestellt. Dabei zeigt Fig. 2 d) die bereits erwähnte Vorladeschaltung 40 in allgemeiner Form. Gemäß Fig. 2 a) ist die Vorladeschaltung 40 durch ein einfaches Widerstandsnetzwerk 43 gebildet. Die hat den Vorteil, dass die Vorladespannung immer einen bestimmten (über das Spannungsteilerverhältnis einstellbaren) Anteil der Zwischenkreisspannung beträgt.

Gemäß Fig. 2 b) ist die Vorladeschaltung 40 mit einer Zener-Diode 44 ausgestattet. Das in Fig. 2b) dargestellte Widerstands-Zener-Dioden-Netzwerk führt vorteilhafterweise zu einer konstanten Vorladespannung.

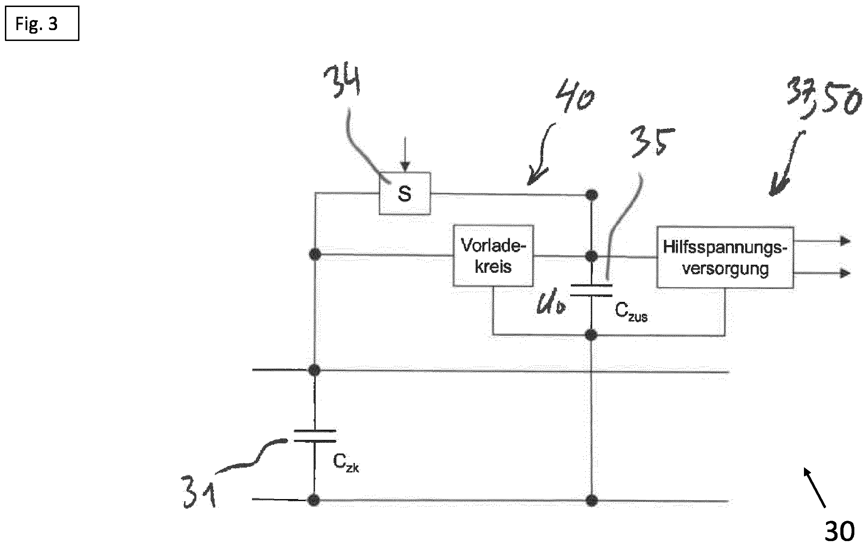

Fig. 2 c) zeigt schematisch eine Längsreglerschaltung 45, die einen höheren Ladestrom erlaubt. Die ist günstig für den Fall, dass der Zusatzkondensator 35 als Stützkondensator für eine Hilfsspannungsversorgung 50 (vgl. Fig. 3) verwendet wird. Die Offset-Spannung $U_0$ kann mittels der Vorladeschaltung 40 in Abhängigkeit von einer Kenngröße, die eine am Netzanschluss 10 anliegende Netzspannung charakterisiert geregelt oder gesteuert werden. Dies kann beispielsweise dadurch geschehen, dass die Vorladeschaltung 40 einen (hier nicht gezeigten) Steuereingang oder Regeleingang aufweist. Damit kann eine Vorladespannung des Zusatzkondensators 35 realisiert werden.

Ein Zwischenkreis 30 mit Vorladeschaltung 40 und Hilfsspannungsversorgung 50 ist in Fig. 3 dargestellt. Der der Entladekreis 37 ist Teil einer Hilfsspannungsversorgung 50 des Elektrowerkzeugs 100. Vorteilhafterweise kann die Offset-Spannung $U_0$ des Zusatzkondensators 35 mittels der Vorladeschaltung 40 auf einen Energiebedarf der Hilfsspannungsversorgung 50 abgestimmt sein. Somit kann sichergestellt (oder zumindest begünstigt) sein, dass die Offset-Spannung $U_0$ niedrig genug ist, um genug Energie aufnehmen zu können und hoch genug ist, um die Hilfsspannungsversorgung 50 des Elektrowerkzeugs 100 zu versorgen.

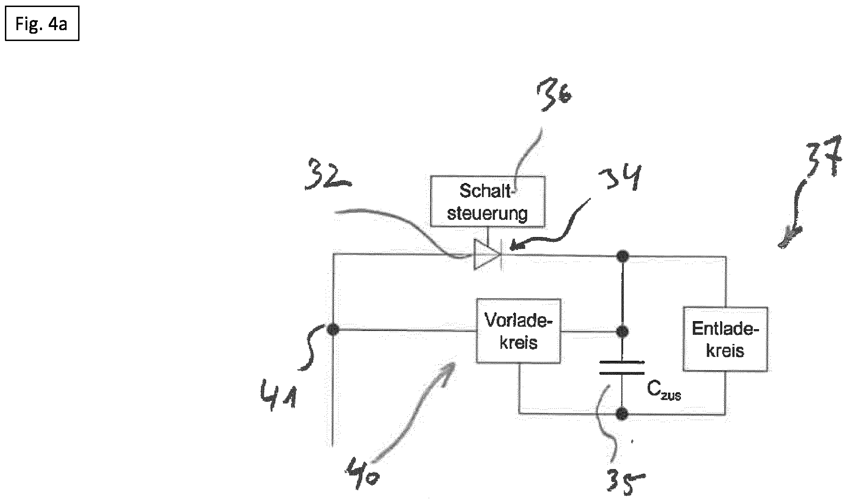

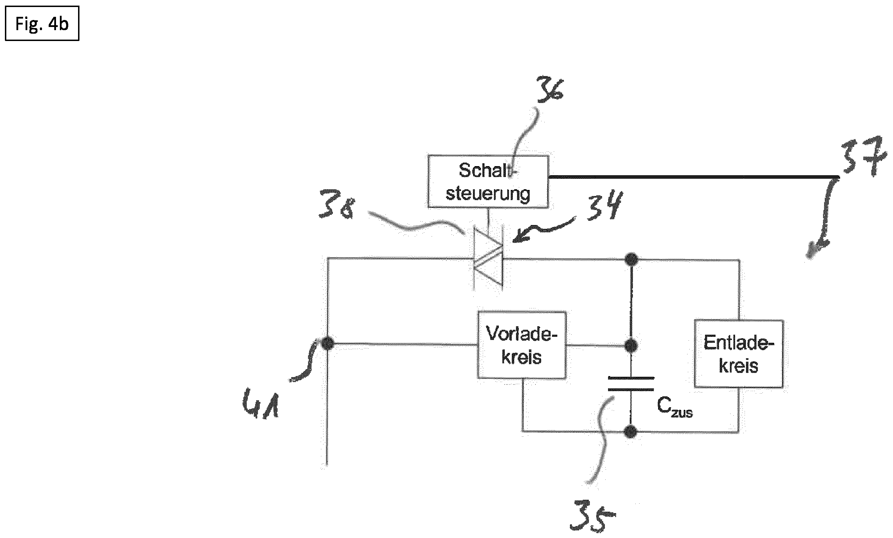

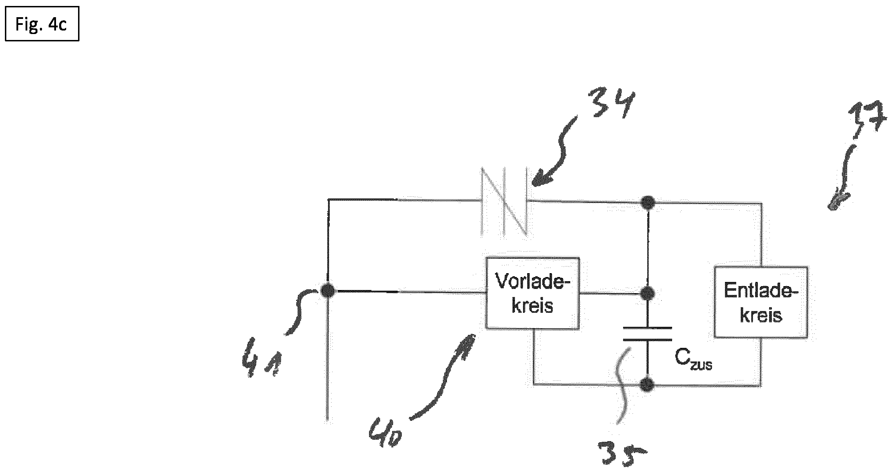

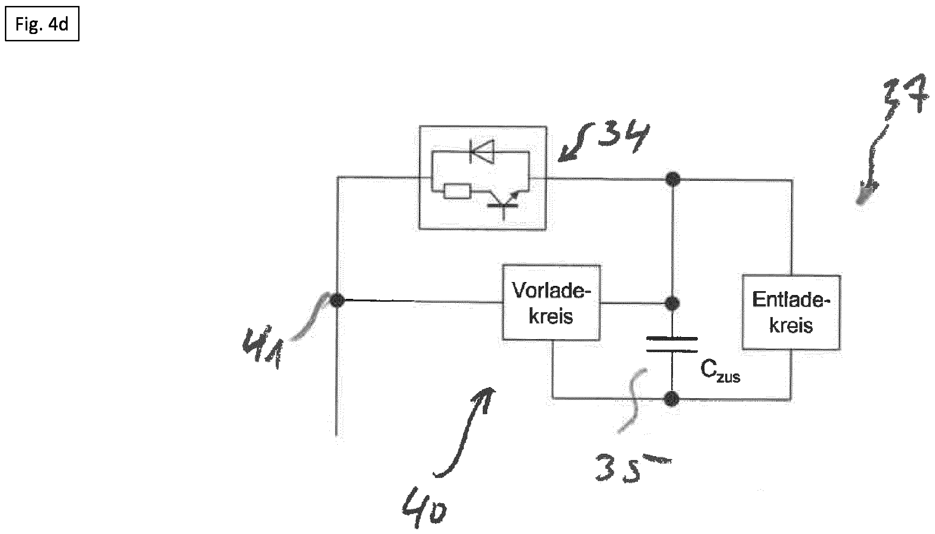

Fig. 4 zeigt einen Zwischenkreis 30 mit Varianten des Schaltelements 34. Das Schaltelement 34 kann aktiv-schaltend ausgebildet sein und insbesondere als MOSFET, IGBT, Thyristor, Triac bereitgestellt sein. Das Schaltelement 34 selbsttätig-schaltend ausgebildet sein und insbesondere als Diac, Sidactor, TVS-Thyristor, Diac-Triac-Kombination oder Funkenstrecke bereitgestellt sein. Die in Fig. 4 gezeigten Ausgestaltungen können zum Tragen kommen, auch wenn das Elektrowerkzeug nicht mit einer Vorladeschaltung (vgl. Fig. 1) ausgestattet ist.

Es ist zu unterscheiden zwischen den steuerbaren Ausgestaltungen der Fig. 2 a), b) und d) und einer selbsttätig schaltenden Ausgestaltungen gemäß Fig. 2 c). Unter den steuerbaren Ausgestaltungen der Fig. 2 a), b) und d) gibt es solche, die nur aktiv eingeschaltet werden und selbsttätig ausschalten. Dies sind die Ausgestaltungen der Fig. 2 a), und b), die jeweils eine externe Schaltsteuerung 36 aufweisen. In der Ausgestaltungen der Fig. 2 a) ist das Schaltelement 34 als Thyristor 32 bereitgestellt. In der Ausgestaltungen der Fig. 2 b) ist das Schaltelement 34 als Triac 38 bereitgestellt. Die Ausgestaltungen der Fig. 2 d) kann auch aktiv ausgeschaltet werden.

Die Ausgestaltungen der Fig. 2 b), c) und d) können darüber hinaus Strom in beiden Richtungen führen und somit den Zusatzkondensator 35 auch aktiv entladen. Durch entsprechende Schaltsteuerungen können steuerbare Ausgestaltungen zu quasi-selbsttätigen Ausgestaltungen abgewandelt werden. Beispielhaft sei eine Thyristor-Zündsteuerung genannt, die den Thyristor zündet, sobald die anliegende Spannung einen Schwellwert überschreitet. Dies würde ein ähnliches Schaltverhalten wie ein Sidactor bewirken. Sidactor, Diac oder TVS-Thyristor sind verwandte Bauelemente, die selbsttätig bei Überschreiten einer Schwellspannung durchzünden, dann einen sehr geringen Spannungsabfall haben und erst bei Unterschreiten eines relativ kleinen Haltestroms wieder sperren.

**Bezuaszeichenliste**

| | |
|---|---|
| 10 | Netzanschluss |
| 15 | Netzfilter |
| 20 | Gleichrichter |
| 30 | Zwischenkreis |
| 31 | Glättungskondensator |
| 32 | Thyristor |
| 33 | Schaltzweig |
| 34 | Schaltelement |
| 35 | Zusatzkondensator |
| 36 | Schaltsteuerung |
| 37 | Entladekreis |
| 38 | Triac |
| 40 | Vorladeschaltung |
| 41 | Vorladeanschlusspunkt |
| 43 | Widerstandsnetzwerk |
| 44 | Zener-Diode |
| 45 | Längsreglerschaltung |
| 50 | Hilfsspannungsversorgung |
| 80 | Motorstufe |
| 90 | Elektromotor |
| 100 | Elektrowerkzeug |

UNetz    Netzspannung (Wechselspannung)
$U_0$    Offset-Spannung

**Patentansprüche**

1. Netzbetreibbares Elektrowerkzeug (100) mit einem Netzanschluss (10), einem dem Netzanschluss (10) nachgeschalteten Gleichrichter (20) und einem Elektromotor (90) mit vorgeschalteter Motorstufe (80), wobei der Gleichrichter (20) und die Motorstufe (80) über einen Zwischenkreis (30) verbunden sind, der einen parallel zum Gleichrichter (20) geschalteten Glättungskondensator (31) und einen parallel zum Gleichrichter (20) geschalteten Schaltzweig (33) aufweist, wobei der Schaltzweig (33) einen Zusatzkondensator (35) aufweist, der mittels eines vom Schaltzweig (33) umfassten Schaltelements (34) bedarfsweise über einen vom Zwischenkreis (30) umfassten Entladekreis (37) entladen werden kann, **dadurch gekennzeichnet, dass** der Zwischenkreis (30) eine Vorladeschaltung (40) aufweist, mittels welcher eine Offset-Spannung ($U_0$) des Zusatzkondensators (35) eingestellt oder einstellbar ist.

2. Elektrowerkzeug (100) nach Anspruch 1,

**dadurch gekennzeichnet, dass** der Entladekreis (37) Teil einer Hilfsspannungsversorgung (50) des Elektrowerkzeugs (100).

3. Elektrowerkzeug (100) nach Anspruch 1 oder 2, **dadurch gekennzeichnet, dass** die Offset-Spannung ($U_0$) mittels der Vorladeschaltung (40) auf einen Energiebedarf der Hilfsspannungsversorgung (50) abgestimmt ist.

4. Elektrowerkzeug (100) nach einem der vorangehenden Ansprüche,
**dadurch gekennzeichnet, dass** die Offset-Spannung ($U_0$) mittels der Vorladeschaltung (40) in Abhängigkeit von einer Kenngröße, die eine am Netzanschluss (10) anliegende Netzspannung charakterisiert, geregelt oder gesteuert wird.

5. Elektrowerkzeug (100) nach einem der vorangehenden Ansprüche,
**dadurch gekennzeichnet, dass** die Vorladeschaltung (40) ein Widerstandsnetzwerk (43) aufweist und/oder oder die Vorladeschaltung (40) eine Zener-Diode (44) aufweist.

6. Elektrowerkzeug (100) nach einem der vorangehenden Ansprüche,
**dadurch gekennzeichnet, dass** die Vorladeschaltung eine Regelung aufweist, insbesondere in Form eines Längsreglers oder eine Längsregelschaltung (45).

7. Elektrowerkzeug (100) nach einem der vorangehenden Ansprüche,
**dadurch gekennzeichnet, dass** das Schaltelement (34) selbsttätig-schaltend ausgebildet ist und insbesondere als Diac, Sidactor, TVS-Thyristor, Diac-Triac-Kombination oder Funkenstrecke ausgebildet ist oder ein solches Element aufweist.

8. Elektrowerkzeug (100) nach einem der vorangehenden Ansprüche,
**dadurch gekennzeichnet, dass** das Schaltelement (34) aktiv-schaltend ausgebildet ist und insbesondere als MOSFET, IGBT, Thyristor, Triac ausgebildet ist oder ein solches Element aufweist.

9. Elektrowerkzeug (100) nach einem der vorangehenden Ansprüche,
**dadurch gekennzeichnet, dass** der Glättungskondensator (31) und/oder der Zusatzkondensator (35) eine Sperrspannung von wenigstens 600 Volt aufweist und vorzugsweise als Folienkondensator ausgebildet ist.

10. Elektrowerkzeug (100) nach einem der vorangehenden Ansprüche,
**dadurch gekennzeichnet, dass** die Kapazität des Glättungskondensators (31) kleiner ist als die Kapazität des Zusatzkondensators (35).

11. Elektrowerkzeug (100) nach einem der vorangehenden Ansprüche, **dadurch gekennzeichnet, dass** die Motorstufe (80) einen Wechselrichter aufweist und/oder der Elektromotor (90) als Drehstrommotor ausgebildet ist.

Fig. 1

$U_{Netz}$

15

20 Gleichrichter

31

34 S

33

35 $C_{zus}$

Entlade-kreis

100

37

80 Inverter

90 Motor

$C_{zk}$

Zwischenkreis

10

30

Fig. 2a

Fig. 2b

Fig. 2c

EP 4 178 103 A1

Fig. 2d

Fig. 3

Fig. 4a

Fig. 4b

EP 4 178 103 A1

Fig. 4c

Fig. 4d

Entlade-kreis

Vorlade-kreis

$C_{zus}$

34

35

40

Europäisches
Patentamt

European
Patent Office

Office européen
des brevets

# EUROPÄISCHER RECHERCHENBERICHT

**Nummer der Anmeldung**

EP 21 20 7172

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 523 332 A1 (SIEMENS AG [DE]) 14. November 2012 (2012-11-14) * Zusammenfassung; Abbildung 2 * * Absatz [0031] – Absatz [0049] * ----- | 1,5,7-11 | INV. H02P27/06 B25F5/00 H02M1/36 H02M7/12 |
| X | EP 3 462 586 A1 (SIEMENS AG [DE]) 3. April 2019 (2019-04-03) * Zusammenfassung; Abbildung 2 * * Absatz [0026] – Absatz [0029] * ----- | 1-4,6-8 | |
| X | EP 2 680 421 A1 (SIEMENS AG [DE]) 1. Januar 2014 (2014-01-01) * Zusammenfassung; Abbildungen 2-4 * * Absatz [0035] – Absatz [0055] * ----- | 1,4-11 | |

**RECHERCHIERTE SACHGEBIETE (IPC)**

H02P
B25H
H02M
B25F

Der vorliegende Recherchenbericht wurde für alle Patentansprüche erstellt

| Recherchenort | Abschlußdatum der Recherche | Prüfer |
|---|---|---|
| München | 22. April 2022 | Zeng, Wenyan |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 20 7172

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2022

| Im Recherchenbericht angeführtes Patentdokument | Datum der Veröffentlichung | Mitglied(er) der Patentfamilie | Datum der Veröffentlichung |
|---|---|---|---|
| EP 2523332 A1 | 14-11-2012 | KEINE | |
| EP 3462586 A1 | 03-04-2019 | EP 3462586 A1 | 03-04-2019 |
| | | WO 2019063214 A1 | 04-04-2019 |
| EP 2680421 A1 | 01-01-2014 | EP 2680421 A1 | 01-01-2014 |
| | | US 2014003099 A1 | 02-01-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3235118 B1